# EUROPEAN PATENT APPLICATION

(11) **EP 2 290 584 A2**
(43) Date of publication of application: **02.03.2011**
(21) Application number: 10251280.3
(22) Date of filing: 16.07.2010
(51) Int. Cl.: G06K 9/50, G06K 9/64, G06F 17/30

(54) **Rapid image categorization**

(30) Priority: 29.07.2009 US 462066
(71) Applicant: Intel Corporation, Santa Clara, CA 95052 (US)
(72) Inventor: Vaughn, Robert L, Albuquerque, NM 87114 (US)
(74) Representative: Beresford, Keith Denis Lewis

(57) **Abstract**

The present invention discloses a method comprising: acquiring an image; digitizing the image; selecting one or more rows from a portion of the image; performing a line scan of the selected rows; retrieving a reference scan; comparing the line scan with the reference scan; identifying a feature; and categorizing the image.

## Description

### BACKGROUND OF THE INVENTION

### 1. FIELD OF THE INVENTION

The present invention relates to a field of a search engine, and, more specifically, to an apparatus for and a method of analyzing images.

### 2. DISCUSSION OF RELATED ART

Image analysis is useful in many different applications, including content-based image storage and retrieval. A user may use a search engine to search through images in a computer. The search engine may be implemented in a combination of hardware and software. However, rapid image categorization is difficult to perform effectively, efficiently, and consistently, especially in a real time environment.

### BRIEF DESCRIPTION OF THE DRAWINGS

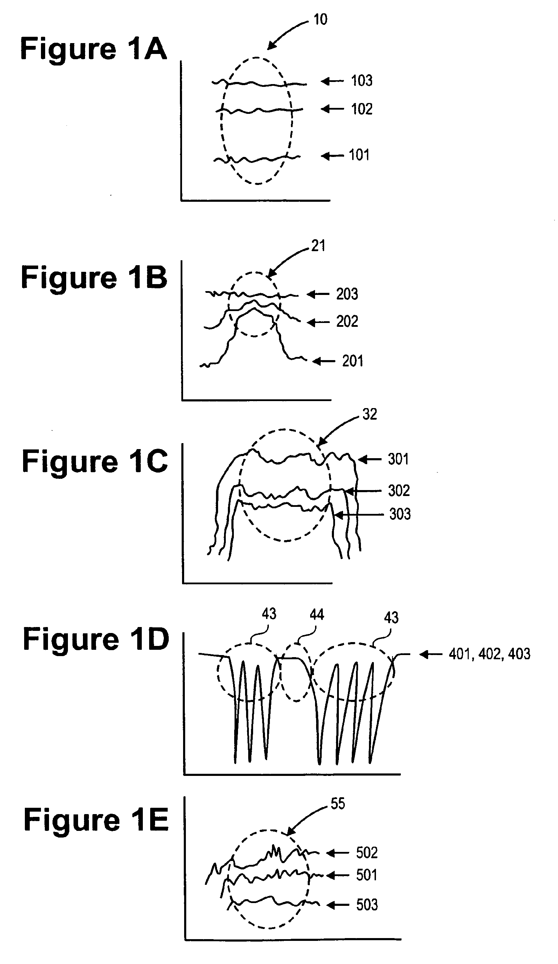

**Figures 1A-1E** show line scans that include identifiable features according to an embodiment of the present invention.

### DETAILED DESCRIPTION OF THE PRESENT INVENTION

In the following description, numerous details, examples, and embodiments are set forth to provide a thorough understanding of the present invention. However, it will become clear and apparent to one of ordinary skill in the art that the invention is not limited to the details, examples, and embodiments set forth and that the invention may be practiced without some of the particular details, examples, and embodiments that are described. In other instances, one of ordinary skill in the art will further realize that certain details, examples, and embodiments that may be well-known have not been specifically described so as to avoid obscuring the present invention.

The present invention discloses a method of categorizing an image rapidly and a rapid image categorizer.

An embodiment of the present invention envisions a method of categorizing an image rapidly after performing a limited image analysis. Attributes of the image are determined ahead of time. Then, the image is characterized, recognized, and categorized based on the predefined attributes. In some cases, the image is recognized with a high confidence level after scanning only a very small portion of the image.

The rapid image categorizer includes several modules, including (1) an image acquirer module, (2) an image digitizer module, (3) a row sampler module, (4) a line scanner module, (5) a library archiver module, (6) a scan comparer module, (7) a feature identifier module, and (8) a feature categorizer module.

In one case, the modules are used in a different order or sequence. In another case, some modules are not used. In still another case, certain modules are used more than once.

First, the image acquirer module acquires an image in color of one or more objects. Second, the image digitizer module digitizes the image into rows of pixels.

Third, the row sampler module selects one or more rows each from one or more portions of the image. For example, one row each is selected from a first quartile (such as an uppermost portion of the image) a second quartile, a third quartile, a fourth quartile, and a fifth quartile (such as a lowermost portion of the image).

Fourth, the line scanner module performs a line scan along the selected row, such as from left to right. A graph of the line scan shows a red-green-blue (RGB) value (such as from 0 to 255) along a y-axis as a function of a pixel location or position (such as from 1 to 441), along an x-axis.

Fifth, the library archiver module retrieves reference scans that have been previously stored in an archive. The archive includes a metadata storage system that is indexed and searchable. Some or all of the new line scans can also be stored in the archive to improve the breadth and depth of the database of reference scans.

Sixth, the scan comparer module compares the line scan with one or more reference scans retrieved from the library module. A metric may include percent match of the line scan with a particular reference scan.

Seventh, the feature identifier module isolates a feature traversed by the line scan in the image to identify a particular subject matter.

An embodiment of the present invention envisions a customizable means for a user to create and edit an image recognition procedure for rapid categorization of the image.

An embodiment of the present invention envisions a software interface, such as a graphical user interface (GUI), for rapid image categorization. The GUI permits a user to customize the image categorization based on the types of images that interest the user. The user uses a pseudo-mathematical language to describe various parameters that characterize the features of interest in the image as traced in each line scan.

The user selects values for each parameter of interest. The parameters are used to delimit various characteristics of the line scan.

One parameter involves "position" in image, such as first quartile (such as uppermost), second quartile, third quartile, fourth quartile, to fifth quartile (such as lowermost).

Another parameter involves "continuous" versus "discrete."

Still another parameter involves "uniform" versus "irregular".

Yet another parameter involves color: such as red, green, blue.

Then, the user applies one or more rules to extract meaning from the line scan. Some rules are derived from experiment. Other rules are derived from modeling. Still other rules are derived from simulation.

Another embodiment of the present invention envisions a machine readable medium that includes rules.

Still another embodiment of the present invention envisions a means to learn from previous line scans to identify features in future line scans.

Yet another embodiment of the present invention envisions an artificial intelligence module.

A line scan in an "uppermost" portion of the image that includes a "continuous" and "bluish" **103** object **10** as a function of position may be identified as a portion of a "sky." See **Figure 1A**. The color is shown as red **101,** green **102,** and blue **103** in **Figure 1A**.

A line scan in the "uppermost" portion of the image that includes a "discrete" and "pale" object **21** "interspersed" with the "continuous" and "bluish" **103** object as a function of position may be identified as a "cloud" in the sky. See **Figure 1B**. The color is shown as red **201,** green **202,** and blue **203** in **Figure 1B****.**

A line scan that includes a "discrete," "uniform," and "reddish" **301** object **32** as a function of position may be identified as a "face" of a person with a pink fleshtone. See **Figure 1C**. The color is shown as red **301,** green **302,** and blue **303** in **Figure 1C**.

A line scan that includes at least one tall and narrow spike **43** separated by high baseline **44** as a function of position may be identified as "line of text" or "table of data" separated by "gap" or "blank space." See **Figure 1D****.** The color is shown as red **401,** green **402,** and blue **403** in **Figure 1D****.** The width of the spike depends on the type, size, case of the font of the text. The text may include different colors **401, 402, 403.**

A line scan that is very jagged and irregular as a function of position may be identified as a complex juxtaposition of various objects that requires further analysis of more rows in the image.

Eighth, the feature categorizer module facilitates or promotes rapid categorization of the image.

In one case, the subject matter includes a landscape, such as observed outdoors in nature.

In another case, the subject matter includes a portrait, such as of part or all of one or more persons.

In still another case, the subject matter includes a Microsoft Power Point presentation of slides or foils.

In yet another case, the subject matter includes a collage. In one case, the collage includes contiguous placement of pictures, graphics, tables, and text. In another case, the collage includes overlapping placement of pictures, graphics, tables, and text.

Many embodiments and numerous details have been set forth above in order to provide a thorough understanding of the present invention. One skilled in the art will appreciate that many of the features in one embodiment are equally applicable to other embodiments. One skilled in the art will also appreciate the ability to make various equivalent substitutions for those specific materials, processes, dimensions, concentrations, etc. described herein. It is to be understood that the detailed description of the present invention should be taken as illustrative and not limiting, wherein the scope of the present invention should be determined by the claims that follow.

## Claims

1. A method comprising:
acquiring an image;
digitizing said image;
selecting a row from a portion of said image;
performing a line scan of said row;
retrieving a reference scan;
comparing said line scan with said reference scan;
identifying a feature; and
categorizing said image.

2. The method of claim 1 wherein said row is selected from an uppermost or lowermost quartile of said image.

3. The method of claim 1 wherein said image comprises colour and said row comprises pixels.

4. The method of claim 3 further showing RGB value of each pixel as a function of position in said row.

5. The method of claim 1 wherein identifying said feature involves applying a rule.

6. The method of claim 5 wherein said rule is derived from one of: (a) experiment; (b) modelling; or (c) simulation.

7. A method comprising:
selecting a portion of an image;
selecting a value for a parameter to describe said portion of said image; and
identifying a feature in said image.

8. The method of claim 7 wherein said portion comprises a row in an uppermost quartile.

9. The method of claim 7 wherein said portion comprises a row in a lowermost quartile.

10. The method of claim 7 wherein a user selects one of: (a) said portion of said image; (b) said value for said parameter; or (c) said feature in said image.

11. An apparatus comprising:
an image acquisition module that acquires an image;
a image digitizer module that digitizes said image;
a row sampler module that selects rows from different portions of said image;
a line scan module that performs a line scan along said rows;
a library module that retrieves reference scans;
a scan comparer module that compares said line scan with said reference scans;
a feature identifier module that isolates a feature traversed by said line scan; and
a feature categorizer module that promotes rapid categorization of said image.

12. The apparatus of claim 11 further comprising:
a graphical user interface.

13. The apparatus of claim 11 further comprising a machine readable medium that includes rules.

14. The apparatus of claim 11 further including a means to learn from previous line scans to identify features in future line scans.

15. The apparatus of claim 14 wherein said means to learn includes an artificial intelligence module.
